# FASCICULE DE BREVET EUROPEEN

(11) **EP 2 132 091 B1**
(45) Date de publication et mention de la délivrance du brevet: **25.07.2012**
(21) Numéro de dépôt: 08788148.8
(22) Date de dépôt: 09.04.2008
(51) Int. Cl.: B64D 15/20, G08B 19/02

(54) **PROCEDE ET DISPOSITIF DE DETECTION DE GIVRE ET/OU CONDITIONS GIVRANTES SUR AERONEF EN VOL**
VERFAHREN UND VORRICHTUNG ZUR ERKENNUNG VON RAUREIF UND/ODER RAUREIFBEDINGUNGEN BEI EINEM FLIEGENDEN FLUGZEUG
METHOD AND DEVICE FOR DETECTING RIME AND/OR RIME CONDITIONS ON A FLYING AIRCRAFT

(30) Priorité: 11.04.2007 FR 0702628
(43) Date de publication de la demande: 16.12.2009
(73) Titulaire: INTERTECHNIQUE, 78373 Plaisir Cedex (FR)
(72) Inventeur: PICCO, Nicolas, F-78373 Plaisir (FR); THILLAYS, Bruno, F-78373 Plaisir (FR); PORTIER, Philippe, F-78373 Plaisir (FR); LARUE, François, F-78640 Neauphle Le Chateau (FR)
(74) Mandataire: Cabinet Plasseraud
(86) Numéro de dépôt international: PCT/FR2008/050626
(87) Numéro de publication internationale: WO 2008/139117

(56) Documents cités:
- WO-A-88/09980
- US-A- 3 594 775
- US-A- 5 709 470
- US-A- 5 790 026

## Description

La présente invention est relative à un procédé et à un dispositif de détection de givre et/ou de conditions givrantes sur un aéronef en vol, sur lequel au moins une surface externe libre, exposée au vent relatif, sur la peau de l'aéronef, en particulier son fuselage, ou sur une sonde en saillie sur l'aéronef dans l'écoulement aérodynamique autour de ce dernier, est réservée comme surface sensible de détection, sur laquelle une accrétion de givre ou glace est susceptible de se former en vol en conditions givrantes.

De nombreux procédés et dispositifs de détection de givre et/ou de conditions givrantes sur un aéronef en vol ont déjà été proposés, ces procédés et dispositifs connus recourant à différentes techniques de mise en oeuvre de phénomènes physiques différents, en particulier thermiques, notamment par le contrôle d'effets thermiques associé à une gestion de puissance de réchauffement de la surface sensible, aérodynamiques, notamment pour assurer un refroidissement au niveau de la surface sensible et/ou un tri des gouttelettes d'eau, éventuellement en surfusion, de tailles différentes présentes dans l'écoulement autour de l'aéronef, optiques, ou des couplages ou combinaisons dans la mise en oeuvre de ces différents phénomènes physiques.

Les procédés et dispositifs basés sur l'observation et le contrôle d'effets thermiques associés à une gestion d'une puissance de réchauffement d'une surface sensible délivrent un signal de présence de givre ou, le plus souvent, soit à un bilan entre l'énergie thermique fournie et le profil de température obtenu sur la surface sensible, soit au palier de fusion complète observable, et à la durée de ce palier, lors du changement d'état du givre ou de la glace en eau (transition solide-liquide) à sensiblement 0°C. En effet, s'il s'est produit une accrétion de givre ou de glace sur la surface sensible, lorsque cette dernière est réchauffée, une partie de l'énergie thermique parvenant à la surface sensible est consommée par la fusion du givre ou de la glace (transition d'état thermodynamique) au lieu de produire une élévation de la température de la surface sensible.

A titre d'exemple US-A-3,594, 775 divulgue un système de détection de la présence de glace, givre ou neige, ou de conditions givrantes, sur une surface, en particulier routière en fonction de la chaleur de fusion par rapport au temps et à la température, pour fournir une indication sur l'existence de telles conditions climatiques, et qui comprend un transducteur ayant un élément sensible avec une surface externe montée dans ladite surface et exposée à l'accrétion de givre, glace ou neige, un réchauffeur pour chauffer cette surface externe avec un courant électrique de chauffage programmé et commandé pendant une période de temps prédéterminée, un thermocouple pour capter la température dudit élément sensible pendant la période de chauffage, une unité de traitement apte à délivrer un signal de détection de givre, glace ou neige, ou de conditions givrantes, et comprenant lui-même un amplificateur de tension, relié au thermocouple, et dont la tension de sortie est appliquée à un double différentiateur, calculant sa dérivée seconde en fonction du temps pendant le chauffage, et des moyens de lecture du niveau d'excursions positives et négatives de la tension de sortie du double différentiateur, qui se produisent seulement pendant un intervalle de temps prédéterminé, au cours de la période de chauffage, et des moyens de traitement des niveaux de tension lus pour délivrer une indication sur la détection de givre, glace, neige ou de conditions givrantes. L'élément sensible est noyé dans un matériau plastique de remplissage, formant boitier isolant thermiquement cet élément sensible de l'environnement en ne laissant exposée que la surface externe sensible de l'élément sensible.

US -A-5, 709, 470 divulgue un procédé et un dispositif de détection de la formation de glace sur un avion en vol, dont la mise en oeuvre repose sur un phénomène physique bien connu qui est la chaleur latente de fusion, en détectant la quantité de chaleur nécessaire pour ramener par fusion de la glace en eau liquide. Un signal énergétique élevé mesuré ne peut être produit que par une transition de glace en eau, de sorte que le système identifie la présence ou l'absence de glace, indépendamment du temps, de la température, de l'altitude, de la pression ou d'autres facteurs. Le procédé consiste à commander une vitesse constante d'élévation de température d'une sonde soumise aux conditions potentielles de formation de givre ou glace, d'une température inférieure à une température supérieure à la température de fusion de la glace, et à mesurer la quantité d'énergie délivrée. Si cette quantité est sensiblement constante lors de plusieurs tests successifs, cela traduit l'absence de glace sur la sonde, alors que si cette quantité de chaleur est rapidement et très supérieure à cette quantité sensiblement constante, cela indique que la sonde était recouverte de glace, dont la chaleur latente de fusion explique l'augmentation de chaleur consommée. Le dispositif comprend un ensemble sonde-réchauffeur, qui comporte un capteur de température couplé thermiquement au réchauffeur, par exemple un module à effet Peltier pouvant également fonctionner en refroidisseur, utile pour permettre à la sonde de revenir rapidement en équilibre thermique avec l'environnement, et ainsi réduire la durée d'un cycle de mesure. Le capteur de température et le réchauffeur sont de préférence isolés électriquement l'un de l'autre, mais tous deux reliés à un circuit électrique avec un générateur de rampe alimentant un comparateur également alimenté par un circuit relié à la sortie du capteur de température, la sortie du comparateur pilotant un amplificateur qui délivre la puissance nécessaire au réchauffeur pour assurer un chauffage avec une vitesse constante d'augmentation de température définie par le générateur de rampe. Le niveau de puissance transmis instantanément au réchauffeur est surveillé par un ordinateur, qui détecte toute pointe de puissance témoignant d'une présence de glace ou givre sur la sonde, en envoyant un signal correspondant sur un dispositif d'affichage pour donner une alerte. Le chauffage est interrompu dès qu'une température supérieure de quelques degrés à la température de fusion normale de la glace (aux environs de 0°C) a été atteinte ou dès que la présence de glace a été détectée, et la sonde peut se refroidir en vue d'un nouveau cycle.

US-A-5,790,026 divulgue un détecteur de glace ou de conditions givrantes, en particulier pour avion. Le détecteur comporte un substrat mince et plat, de préférence flexible, sur une première face duquel est disposé un capteur de température, en un matériau ayant une caractéristique, de préférence sa résistance électrique, qui est fonction de sa température, et sur la seconde face duquel est disposé un réchauffeur, dont le périmètre enveloppe celui du capteur de température. Ce dernier et le réchauffeur sont alimentés en courant par une unité de commande et détection, qui contrôle la caractéristique du capteur et en déduit des informations sur les conditions de formation de glace ou la présence de glace, et le nombre de détections par intervalle de temps, qui procure un taux d'accrétion de givre. Le réchauffeur est activé après détection de givre ou de conditions givrantes afin de faire fondre le givre présent sur le capteur de température sur la première face du substrat. En état de veille, un faible courant de veille dans le capteur permet de mesurer sa température, et, si cette température est voisine de la température de givrage (au voisinage de 0°C), l'unité de commande passe en mode de détection, et alimente le capteur en impulsions de courant d'amplitude très supérieure à celle du courant de veille, et qui donne des mesures de température différentes selon que la première face du substrat et le capteur de température sont ou non recouverts de givre, du fait du palier de température à la température de changement de phase de la glace en eau, ce qui permet la détection. Ensuite, l'unité de commande fait fonctionner le réchauffeur, pour faire fondre toute glace présente sur le capteur de température, qui est ensuite remis en configuration de détection, puis de veille, après un certain nombre de cycles de détection sans résultat de présence de givre, glace ou conditions givrantes. La surface entourant le dispositif de détection de givre est dégagée de tout givre ou glace par un système de chauffage.

Le brevet US-A-4 980 673 (WO 88/09980) divulgue un dispositif de détection de glace mettant en oeuvre un tel procédé de détection par contrôle d'effets thermiques, et qui comprend une sonde de détection de glace, sur laquelle une surface sensible exposée à l'écoulement d'air ambiant est sélectivement chauffée par des moyens de chauffage commandés par un circuit électronique de commande et régulation, la température de la surface sensible étant détectée par un capteur de température relié au circuit électronique de commande et régulation des moyens de chauffage ainsi qu'à des moyens d'horloge constituant un chronomètre et à un circuit électronique de mesure, ce dernier et le circuit électronique de commande et régulation étant reliés à une unité de traitement de données, apte à délivrer un signal de détection de givre, et comprenant des moyens électroniques et informatiques aptes à commander le circuit électronique de commande et régulation des moyens de chauffage, ainsi qu'à établir des conversions entre des signaux temporels délivrés par les moyens d'horloge en relation avec des mesures du capteur de température et des conditions de givrage de la surface sensible.

Ce dispositif de détection mesure le délai séparant les instants de passage de la température mesurée de la surface sensible à deux températures seuils, dont l'une est inférieure et l'autre est supérieure au palier à une température voisine de 0°C (point de fusion de la glace sur la surface sensible), au cours d'une phase de réchauffement de la surface sensible à partir d'une température initiale plus basse que la température seuil inférieure au palier, jusqu'à une température finale de la phase de réchauffement, plus haute que la température seuil supérieure au palier, et pour laquelle la surface sensible est totalement dégivrée et sèche.

Par comparaison de cette durée, entre les instants de passage de la température mesurée aux deux températures seuils précitées, avec des durées préenregistrées pour différents états de givrage de la surface sensible, ce dispositif connu délivre un signal de givrage fonction de la durée mesurée, laquelle correspond sensiblement au temps de fusion du givre ou de la glace déposé sur la surface sensible. La mesure des températures n'est utilisée que pour déclencher et arrêter le chronomètre, et le suivi en temps est comparé à des valeurs tabulées prédéfinies, uniquement ajustées par rapport à la vitesse de réchauffement observée.

Enfin, ce dispositif connu est décrit comme permettant d'améliorer le suivi des échanges thermiques, et en particulier de la fraction de ces derniers due à la fusion de la glace, en déterminant la contribution des autres pertes (contact avec la structure, variation de la vitesse de l'air, etc....).

Les inconvénients de ce dispositif de détection, et du procédé mis en oeuvre, sont nombreux et très substantiels. Tout d'abord, le principe de détection est assez peu fiable, car, si un élément perturbateur vient modifier le temps de montée de la température de la surface sensible, le dispositif interprète cette modification comme une indication d'une présence de glace. Par exemple, l'arrivée brutale de gouttelettes d'eau sur la surface sensible (lors d'une traversée d'un nuage dense par l'aéronef) vient augmenter les échanges thermiques au niveau de la surface sensible, dont la montée en température est en conséquence ralentie. De plus, comme le principe de détection repose sur la mesure d'un temps de fusion de la couche de glace déposée sur la surface sensible, il faut donc qu'une bonne partie, voire la totalité, de la couche de glace fonde pour obtenir une détection significative. Mais l'expérience montre qu'une couche de glace peut être arrachée de la surface sensible, par l'écoulement aérodynamique autour de l'aéronef, dès qu'une très faible proportion de la couche de glace a fondu, ce qui perturbe fortement, voire fausse complètement, une mesure basée sur l'énergie thermique nécessaire à la fusion de la couche de glace.

En outre, à une température ambiante proche de 0°C, le principe de détection proposé dans US-A-4 980 673 précité ne peut pas fonctionner, car cette température ambiante est déjà supérieure à la température seuil inférieure utilisée pour déclencher la mesure du temps de fusion, ce qui ne permet pas de déterminer un instant de déclenchement de cette mesure.

Enfin, au-delà du principe de détection proprement dit, ce dispositif de détection connu ne permet pas la détection de conditions givrantes, mais uniquement la détection de givre ou de glace naturellement déposé sur la surface sensible.

Le problème à la base de l'invention est de proposer un procédé et un dispositif de détection de givre et/ou de conditions givrantes, qui ne présentent pas les inconvénients du dispositif et du procédé de l'état de la technique présentés ci-dessus, et, d'une manière générale, qui conviennent mieux que les divers dispositifs et procédés de détection connus aux diverses exigences de la pratique. En particulier, l'invention vise un procédé et un dispositif fiables, pratiquement insensibles aux éléments perturbateurs statistiquement les plus fréquents et importants, tels que la traversée des nuages denses, sans qu'il soit besoin de recourir à des valeurs tabulées pour post-traiter des mesures effectuées, ni d'effectuer de recalage permanent vis-à-vis de pertes thermiques potentielles pouvant refléter la contribution de perturbations telles que projections de gouttelettes, variations de la vitesse et/ou de la température de l'air.

A cet effet, l'invention propose un procédé de détection de givre et/ou de conditions givrantes sur un aéronef en vol, sur lequel au moins une surface externe libre, exposée au vent relatif, et de préférence d'au moins un élément sensible conducteur de la chaleur d'un dispositif de détection selon l'invention, tel que plus précisément présenté ci-dessous, dont ledit élément sensible est intégré à l'aéronef de sorte que la surface externe sur la peau de l'aéronef ou sur une sonde en saillie sur l'aéronef dans l'écoulement aérodynamique autour de ce dernier, est une surface sensible de détection, sur laquelle une accrétion de givre ou glace est susceptible de se former en vol en condition givrante, le procédé de l'invention étant caractérisé en ce qu'il comprend au moins un cycle comportant au moins les étapes suivantes, consistant à :
- surveiller les variations du flux thermique entre ladite surface sensible et ledit écoulement aérodynamique, qui découlent des variations du coefficient d'échange thermique par convection forcée entre ladite surface sensible et ledit écoulement aérodynamique en fonction de l'accrétion de givre ou glace,
- considérer qu'il y a arrachement, par ledit écoulement, d'une pellicule de givre ou glace formée sur ladite surface sensible si, après un intervalle de temps au cours duquel on constate une réduction lente ou sensiblement nulle du flux thermique, on détecte une augmentation brusque dudit flux thermique à une température voisine du point de fusion du givre ou de la glace (soit aux alentours de 0°C), et
- délivrer, suite à la détection d'un arrachement de givre ou glace, un signal de présence de givre ou de conditions givrantes.

Le principe de détection mis en oeuvre par le procédé et le dispositif de l'invention ne repose donc pas sur la mesure d'un délai mais sur la seule observation de l'évolution d'un flux thermique, afin de rechercher non pas une évolution lente liée à une éventuelle fusion de la glace, mais une brusque remontée du flux thermique, analysé en temps réel, et dont ladite brusque remontée à une température voisine de 0°C est nécessairement la détection d'un arrachement d'une couche de givre ou glace préalablement formée sur la surface sensible, ce principe de détection fonctionnant d'ailleurs même si ladite couche de givre ou glace formée sur la surface sensible est simplement arrachée, sans fusion même partielle.

Cependant, il est avantageux que le procédé de l'invention comprenne également, de préférence pour chaque cycle, au moins une étape de réchauffement de ladite surface sensible par mise de cette dernière, de préférence par l'intermédiaire dudit élément sensible, en relation d'échange thermique avec au moins un réchauffeur, de sorte à provoquer au moins une fusion partielle d'une pellicule de givre ou glace éventuellement formée sur ladite surface sensible, au cours d'au moins une phase antérieure d'accrétion de givre ou glace.

En outre, au moins une étape de réchauffement de ladite surface sensible peut être avantageusement utilisée pour dégivrer cette dernière, en cas d'un arrachement partiel de la pellicule de givre ou glace qui la recouvrait, de sorte à redonner à la surface sensible un état de surface propice à la bonne exécution du cycle de détection suivant.

En outre, il est avantageux que l'étape de réchauffement ou la dernière d'entre elles soit suivie d'une étape finale du cycle qui est une étape de refroidissement, permettant un retour plus rapide que par un refroidissement naturel à une température appropriée comme température initiale pour commencer le cycle suivant.

On réalise ainsi un détecteur de givre-dégivreur de la surface sensible. Mais, avantageusement de plus, afin de réaliser également un détecteur de conditions givrantes, le procédé de l'invention comprend de plus, de préférence pour chaque cycle, une première étape qui est une étape de surrefroidissement de ladite surface sensible, par rapport à la température d'équilibre naturel, par mise de ladite surface sensible, de préférence par l'intermédiaire dudit élément sensible, en relation d'échange thermique avec au moins un refroidisseur, de sorte à favoriser la formation de givre ou glace sur ladite surface sensible dans des conditions proches du givrage. Cette étape de surrefroidissement procure, en pratique, une anticipation du phénomène de givrage. On comprend que le procédé de détection selon l'invention est efficace dès qu'une couche de givre ou glace s'est formée sur la surface sensible, même si la température ambiante est très proche de 0°C, puisqu'il suffit de provoquer un arrachement de cette couche de givre ou glace pour qu'une augmentation brusque du coefficient d'échange thermique soit obtenue. Mais en outre, par le surrefroidissement de la surface sensible lorsque les conditions de température ambiante sont trop proches de 0°C, le procédé de détection selon l'invention permet de préserver la séquence de fonctionnement se déroulant pendant l'étape de réchauffement, à savoir le réchauffement du givre ou de la glace jusqu'à 0°C, la formation d'une couche d'eau sous la glace à 0°C, puis l'arrachement de la couche de glace et la montée en température de la surface sensible.

Bien entendu, une étape de refroidissement constituant l'étape finale d'un cycle peut se poursuivre par une étape de surrefroidissement constituant la première étape du cycle suivant, dans le cas du procédé de détection de conditions givrantes, et c'est pour éviter toute confusion, que ci-dessus comme dans la suite du présent mémoire descriptif, la première étape ou étape de refroidissement de la surface sensible par rapport à la température d'équilibre naturel est dénommée étape de surrefroidissement, l'expression "étape de refroidissement" étant utilisée pour désigner un refroidissement assurant un retour de la température sensiblement à la température d'équilibre naturel.

En conséquence, le procédé de l'invention constitue effectivement un procédé de détection de givre et/ou de conditions givrantes s'il comprend au moins une succession d'au moins deux cycles dont l'un au moins, et de préférence chacun, comprend au moins une étape de surrefroidissement suivie d'au moins une étape de réchauffement, elle-même suivie d'au moins une étape de refroidissement de ladite surface sensible, de sorte à anticiper la formation de givre ou glace sur cette surface, puis détecter cette formation par détection de son arrachement, et régénérer ladite surface sensible, puis ramener cette dernière à des conditions de température plus favorables au déroulement du cycle suivant.

Dans un mode avantageux de mise en oeuvre du procédé de l'invention, l'évolution du flux thermique est déterminée à partir de la puissance thermique générée (par le ou les réchauffeurs et/ou refroidisseurs) et de mesures de température à l'aide d'au moins un capteur de température disposé sous ladite surface sensible, de préférence dans ledit au moins un élément sensible, et la surveillance des modifications du profil de température dudit élément sensible, en tant que profil de température de ladite surface sensible.

De manière simple et efficace, les modifications dudit profil de température sont avantageusement déterminées par le calcul de la dérivée temporelle d'un écart de température ou d'une température.

Dans ce cas, le procédé de l'invention comprend avantageusement un suivi temporel sensiblement en continu de l'évolution de la température de ladite surface sensible, et la délivrance d'un signal témoignant d'un arrachement de givre ou glace, préalablement déposé sur la surface sensible, ledit signal résultant de la détection d'au moins une rupture de pente de la courbe d'évolution de température résultant dudit suivi temporel.

En outre, afin que le procédé de l'invention fournisse également un signal témoignant de la sévérité des conditions givrantes, le procédé comprend de plus au moins une mesure de la durée d'un palier à sensiblement 0°C sur la courbe de température, du fait que la durée dudit palier est d'autant plus longue que l'épaisseur de la pellicule de glace ou givre déposée est épaisse.

Dans le même but, le procédé de l'invention peut comprendre, de plus, ou en alternatif, le pilotage de la durée de la phase d'accrétion de givre ou glace préalable à toute étape de réchauffement, ce pilotage consistant à réduire progressivement la durée de ladite phase d'accrétion sans obtenir de dépôt de givre ou glace sur ladite surface sensible, du fait que les conditions de givrage sont d'autant plus sévères que cette durée limite est courte. En outre, pour déterminer la présence de conditions givrantes, le procédé de l'invention utilise avantageusement (par un circuit électronique de régulation et une unité électronique et informatique de traitement de données) des informations de référence comprenant au moins des mesures de vitesse de l'aéronef (nombre de Mach), de température d'arrêt et/ou de température statique, fournies par l'aéronef et/ou un autre dispositif embarqué sur ou dans ce dernier.

L'invention a également pour objet un dispositif de détection de givre sur un aéronef en vol, qui comporte au moins une surface externe et sensible à l'accrétion de givre ou glace en vol de l'aéronef en conditions givrantes, et, dans un boîtier, au moins un réchauffeur avec lequel ladite surface externe est sélectivement mise en relation d'échange thermique, et au moins un capteur de température détectant une température image de la température de ladite surface externe, ledit au moins un capteur de température et ledit au moins un réchauffeur étant reliés à des circuits électroniques respectivement de mesure et de régulation, en communication avec une unité de traitement de données apte à délivrer un signal de détection de givre, comme connu de WO 88/09980. Le dispositif de l'invention, qui peut de plus détecter aussi des conditions givrantes, est caractérisé par les mesures techniques de la partie caractérisante de la revendication 13.

De plus, le dispositif selon l'invention peut avantageusement comprendre au moins un module à effet Peltier ou thermoacoustique constituant un refroidisseur et/ou un réchauffeur, selon la polarité de son alimentation électrique et l'éventuelle inversion de cette polarité.

Mais, bien entendu, tout réchauffeur peut être constitué, de manière plus classique, par au moins une résistance électrique chauffante intégrée dans ledit boîtier, pour réchauffer la surface sensible, tandis qu'au moins un module à effet Peltier ou thermoacoustique peut être également intégré dans ledit boîtier et utilisé uniquement comme refroidisseur, pour des étapes de refroidissement et/ou de surrefroidissement de la surface sensible.

En outre, ledit boîtier du dispositif peut avantageusement délimiter une ceinture conductrice de la chaleur, entourant au moins partiellement ladite surface sensible et sensiblement dans le prolongement de cette dernière, de sorte que ladite ceinture et ladite surface sensible sont simultanément exposées à l'écoulement aérodynamique autour de l'aéronef, ladite ceinture étant protégée contre la formation de givre ou glace sur elle par réchauffement par ledit drain thermique et/ou par au moins un réchauffeur dédié, afin de faciliter l'arrachement de la glace de la surface sensible.

Afin que la régulation des réchauffements et/ou refroidissements ou sur-refroidissements, le cas échéant, de l'élément sensible ne soit pas perturbée par la ceinture anti-givrée dudit boîtier, il est de plus avantageux que ledit élément sensible soit, d'une part, isolé thermiquement dudit boîtier et, d'autre part, en contact thermique avec au moins un réchauffeur et au moins un refroidisseur, avantageusement sous la forme d'au moins un module à effet Peltier ou thermoacoustique, disposés en interface entre ledit élément sensible et ledit drain thermique.

D'autres caractéristiques et avantages de l'invention ressortiront de la description donnée ci-dessous, à titre non limitatif, d'exemples de réalisation décrits en référence aux dessins annexés sur lesquels :
- la figure 1 représente schématiquement, en coupe transversale, un capteur à effet d'échange thermique du dispositif de détection de l'invention,
- la figure 2 représente schématiquement en succession trois phases caractéristiques du procédé de détection selon l'invention,
- les figures 3a et 3b sont des chronogrammes représentant, en correspondance, les courbes respectives d'évolution temporelle du flux thermique et de la température au niveau de la surface sensible du capteur de la figure 1,
- la figure 4 est un chronogramme analogue à celui de la figure 3b pour une succession de trois cycles de détection avec réduction progressive de la durée de l'étape de surrefroidissement pour réduire progressivement la durée du palier de température à sensiblement 0°C, pour l'appréciation de la sévérité de conditions de givrage, et
- la figure 5 est une représentation schématique du dispositif de détection selon l'invention avec un capteur à effet d'échange thermique analogue à celui de la figure 1.

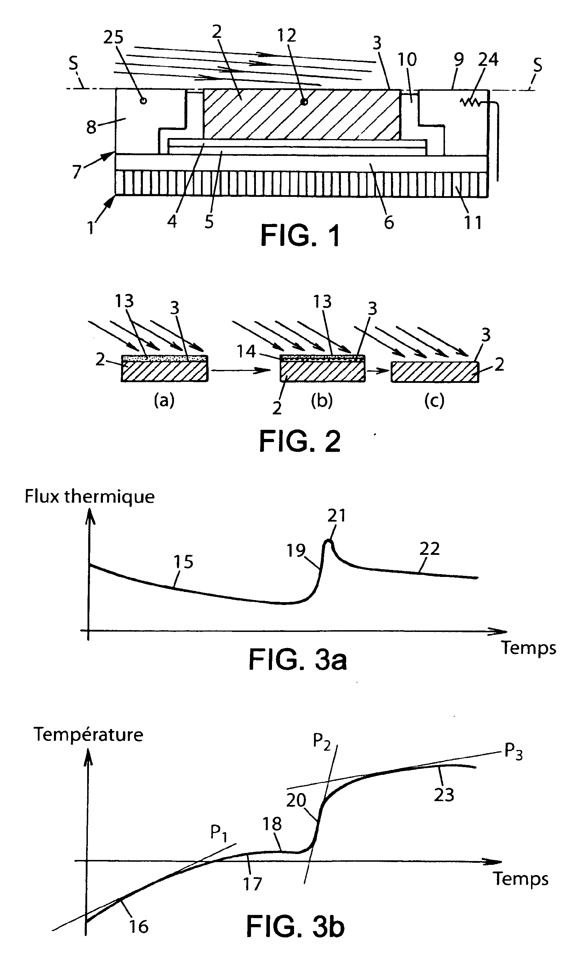

Le capteur 1 à effet d'échange thermique de la figure 1 comprend un élément sensible 2, conducteur de la chaleur, dans cet exemple un élément métallique, dont la base supérieure, sur la figure 1, est libre et constitue la surface sensible 3 du capteur 1, et dont la base inférieure repose sur un réchauffeur 4 et un refroidisseur 5 montés en interface entre l'élément sensible 2 et un drain thermique 6 formant la base d'un boîtier 7 de support, également conducteur de la chaleur, et de préférence métallique, comportant une partie latérale, qui constitue une ceinture 8 entourant, de préférence complètement, au moins la partie de l'élément sensible 2 qui est adjacente à la surface sensible 3. La surface sensible 3 est sensiblement dans le prolongement de la surface extérieure libre 9 de la ceinture 8, et de préférence légèrement en saillie par rapport à cette dernière, avec interposition d'un joint d'isolation thermique 10, autour des surfaces latérales de l'élément sensible 2, du réchauffeur 4 et du refroidisseur 5, et entre ces derniers et le corps du boîtier 7. De plus, un radiateur 11 peut être aménagé sous le drain thermique 6.

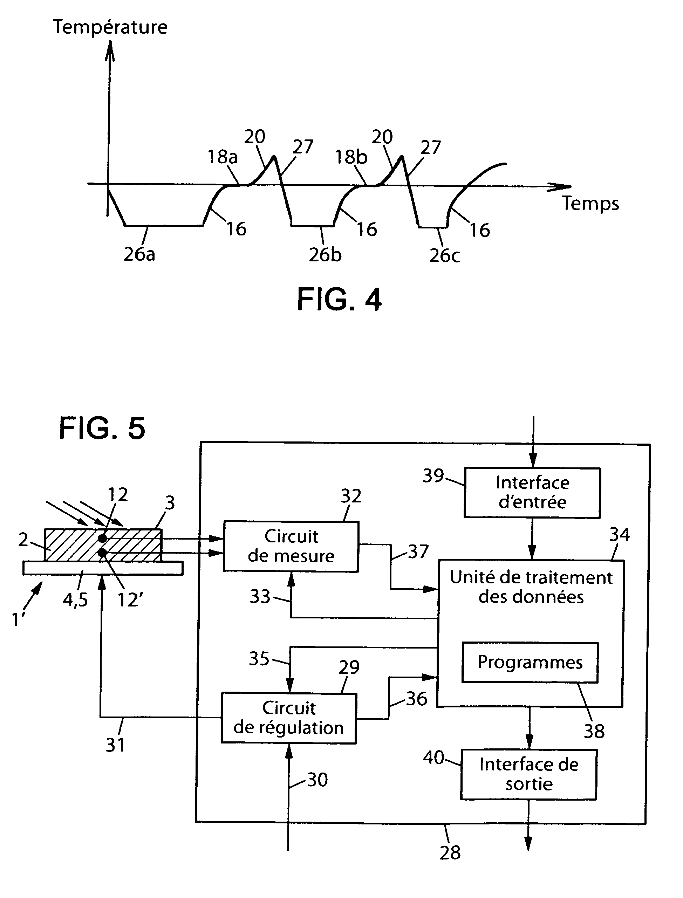

De la sorte, l'élément sensible 2 peut subir un flux thermique provenant sélectivement du réchauffeur 4 ou du refroidisseur 5, lorsque leur fonctionnement est commandé par un circuit de commande dont un mode de réalisation est plus précisément décrit ci-dessous en référence à la figure 5.

Dans un exemple de réalisation, le réchauffeur 4 et le refroidisseur 5 sont simultanément réalisés par un module d'au moins un élément à effet Peltier, fonctionnant normalement en refroidisseur, et plus particulièrement en mode froid régulé (auquel cas sa face directement en contact avec la base inférieure de l'élément sensible 2 constitue le refroidisseur effectif), et fonctionnant en réchauffeur par inversion de la polarité de son alimentation électrique (auquel cas sa face directement en contact avec la base de l'élément sensible 2 constitue un réchauffeur effectif).

Lorsque le module (4-5) à effet Peltier fonctionne en refroidisseur de la base de l'élément sensible 2, de la chaleur est transmise au drain thermique 6 par la face du module à effet Peltier en contact avec ce drain 6, lequel transmet par conduction une partie de cette quantité de chaleur dans le boîtier 7 conducteur, et dans la ceinture 8, dont la surface libre extérieure 9 est ainsi réchauffée.

Mais, que le module à effet Peltier (4-5) soit alimenté électriquement pour fonctionner en refroidisseur ou en réchauffeur, un flux thermique s'établit dans l'élément sensible 2, entre sa base en contact avec le module à effet Peltier (4-5) et la surface sensible 3.

Un capteur de température 12, sous la forme d'un thermocouple, est implanté dans l'élément sensible 2 à faible distance sous la surface sensible 3, et permet d'effectuer un suivi temporel sensiblement en continu de la température au niveau du site d'implantation du capteur de température 12 dans l'élément sensible 2, de sorte à donner une image de l'évolution temporelle de la température de la surface sensible 3.

En variante, le réchauffeur 4 est un réchauffeur plat comprenant au moins une résistance électrique chauffante, de préférence régulée, tandis que le refroidisseur 5 est constitué par un module à au moins un élément à effet Peltier uniquement utilisé en mode froid, de préférence régulé.

La commande du fonctionnement du réchauffeur 4 et du refroidisseur 5, qui sont à puissance thermique variable, peut être telle que le réchauffeur 4 et le refroidisseur 5 ne sont pas simultanément utilisés, mais, en variante, il est possible que le refroidisseur 5 constitué d'un module à effet Peltier soit utilisé en permanence comme refroidisseur, le réchauffeur 4, à résistance électrique chauffante, n'étant utilisé que par intermittence en diffusant une puissance thermique qui vient compenser, lorsque cela est nécessaire, le fonctionnement permanent du module à effet Peltier en refroidisseur. Ces deux dernières variantes ont pour avantages d'augmenter la durée de vie du module à effet Peltier ainsi que de raccourcir le délai de transition entre les modes de refroidissement et de réchauffe.

En variante également, le réchauffeur 4 et le refroidisseur 5 peuvent être simultanément constitués par un module à au moins un élément à un effet thermoacoustique à la place du module à au moins un élément à effet Peltier.

L'ensemble du capteur à effet d'échange thermique 1 ainsi constitué peut être monté sur un aéronef en étant intégré dans la peau de l'aéronef ou, plus facilement, dans une sonde à profil aérodynamique, elle-même montée en saillie sur l'aéronef, de sorte que dans les deux cas, l'élément sensible 2 est monté dans le boîtier 7 de telle manière que la surface sensible 3 de l'élément sensible 2 et la surface libre externe 9 de la ceinture 8 sont exposées à l'écoulement aérodynamique, ou vent relatif, qui s'établit autour de l'aéronef, et est représenté schématiquement sur la figure 1 par des filets d'air orientés par des flèches indiquant la direction de l'écoulement et transportant, éventuellement des gouttelettes d'eau, pouvant être en surfusion, en particulier lorsque l'aéronef traverse des nuages denses, en conditions givrantes.

Lorsque le capteur 1 est intégré dans la peau d'un aéronef ou d'une telle sonde en saillie sur l'aéronef et de sorte que la surface sensible 3 et la surface libre externe 9, respectivement de l'élément sensible 2 et de la ceinture 8, sont dans le prolongement l'une de l'autre et de la surface externe S de la peau correspondante de l'aéronef ou de ladite sonde, ce capteur 1 peut être mis en oeuvre selon trois modes de fonctionnement.

Le premier mode de fonctionnement du capteur 1 repose sur une variation brusque du coefficient d'échange thermique par convection forcée sur la surface sensible 3 de l'élément sensible 2, cette variation brusque étant provoquée par l'arrachement, au moins partiel, d'une couche de glace ou givre qui s'est préalablement déposée sur la surface sensible 3, en vol de l'aéronef en conditions givrantes. Cette variation brusque du coefficient d'échange thermique induit une variation, également brusque, du flux thermique qui est imposé dans l'élément sensible, laquelle variation brusque du flux thermique a pour conséquence de modifier, également brutalement, l'évolution temporelle de la température au niveau du capteur de température 12.

Sur la base de ce premier mode de fonctionnement, un dispositif de détection comportant le capteur à effet d'échange thermique 1 peut être utilisé comme détecteur de givre. Un cycle de détection comprend dans ce cas une phase ou étape d'accrétion de givre ou glace sur la surface sensible 3, à la température d'équilibre naturel par convection forcée de cette surface 3 sous l'effet de l'écoulement aérodynamique, puis une phase ou étape de réchauffement de cette surface 3, par la mise en fonctionnement du réchauffeur 4 du capteur 1, ce qui permet, ou, au moins, facilite, l'arrachement, par l'écoulement aérodynamique, de la glace ou du givre accrété(e) sur la surface sensible 3.

Après cet arrachement, l'étape de réchauffement est, de préférence, poursuivie pendant un intervalle de temps, de préférence variable et ajusté à l'épaisseur de glace ou givre déposée, afin de complètement dégivrer la surface sensible 3, puis est suivie, de préférence, d'une étape de refroidissement, permettant de ramener plus rapidement la surface sensible 3 à des conditions de température voisines de la température d'équilibre naturel par convection forcée, telle que celle ou voisine de celle qui prévalait avant la phase de réchauffement, afin de retrouver des conditions de température propices à une éventuelle mise en oeuvre d'un cycle suivant.

Le deuxième mode de fonctionnement du capteur 1 repose sur un cycle comprenant, en succession, au moins un refroidissement à une température sensiblement inférieure à la température d'équilibre naturel en convection forcée, dit « surrefroidissement » de la surface sensible 3, suivi d'au moins un réchauffement de cette même surface 3. Le surrefroidissement de la surface sensible 3 est obtenu par surrefroidissement de l'élément sensible 2, assuré par la mise en fonctionnement du refroidisseur 5, tel que le module à effet Peltier précité en polarisation normale, pour favoriser la formation de glace ou givre sur la surface sensible 3 lorsque les conditions aérothermiques environnantes se rapprochent des conditions givrantes, dont la survenance au niveau de la surface sensible 3 est ainsi anticipée. Ensuite, comme dans le premier mode de fonctionnement présenté ci-dessus, le réchauffement de l'élément sensible 2, obtenu par la mise en fonctionnement du réchauffeur 4, par exemple par le polarisation inversée du module à effet Peltier précité, entraine alors l'arrachement de la glace formée sur la surface sensible 3 par effet aérodynamique, cet arrachement induisant la variation brusque du coefficient d'échange thermique évoquée ci-dessus, et conduisant aux variations brusques précitées du flux thermique dans l'élément sensible 2 et de la température mesurée par le capteur de température 12, ce qui peut-être détecté par le suivi temporel sensiblement continu de l'évolution de la température mesurée.

Comme pour le premier mode de fonctionnement, le deuxième s'accommode avantageusement d'une certaine prolongation de l'étape de réchauffement pour assurer un dégivrage complet de la surface sensible 3, puis d'une étape de refroidissement, permettant d'augmenter la sensibilité du capteur 1 en raccourcissant le délai de refroidissement de la surface sensible 3 à la température d'équilibre naturel par convection forcée, par rapport à un refroidissement naturel jusqu'à cette température d'équilibre, ou à la température sensiblement négative recherchée en début de cycle, cette étape de refroidissement mettant ainsi le capteur 1 plus rapidement dans des conditions de température favorables au déroulement d'un cycle suivant.

Le troisième mode de fonctionnement repose sur la mise en oeuvre de cycles de détection consécutifs, autorisés par le dégivrage, en fin de chaque cycle, de la surface sensible 3 de l'élément sensible 2 par le même effet que celui qui est utilisé pour détecter, à savoir un flux thermique positif depuis le réchauffeur 4 jusqu'à la surface sensible 3 au travers de l'élément sensible 2, c'est-à-dire par une poursuite ou, éventuellement, une reprise d'une étape de réchauffement, après détection d'un arrachement de glace, comme déjà évoqué ci-dessus de manière préférée pour les premier et deuxième modes de fonctionnement, avec de préférence ensuite une étape de refroidissement, préalable à une étape ou phase d'accrétion de glace sur la surface sensible 3 avec surrefroidissement de cette dernière et de l'élément sensible 2, au début du cycle suivant. Ces successions de cycles de détection permettent de déterminer au moins une information de sévérité de conditions givrantes et/ou de sortie des conditions givrantes.

Revenant sur le fonctionnement de base du dispositif de l'invention en détecteur de givre, après une phase d'accrétion à la température d'équilibre normal en convection forcée, le réchauffeur 4 du capteur 1 de la figure 1, par exemple le module à effet Peltier alimenté en polarisation inverse, est utilisé pour réchauffer la surface sensible 3, puis le fonctionnement du refroidisseur 5 est substitué à celui du réchauffeur 4, par exemple le module à effet Peltier est alimenté en polarisation normale pour fonctionner en refroidisseur, pour aider au refroidissement (sans surrefroidissement) facilitant le retour aux conditions de température initiale.

En l'absence de glace sur la surface sensible 3, le flux thermique établit au travers de l'élément sensible 2, entre le réchauffeur 4 et la surface sensible 3, est uniquement déterminé par la puissance thermique dissipée par le réchauffeur 4 du côté de l'élément sensible 2, et les échanges aérothermiques du côté de la surface sensible 3.

Ces échanges aérothermiques dépendent essentiellement des caractéristiques de la surface sensible 3 (son aire, sa rugosité, la conductivité thermique du matériau de l'élément sensible 2 en surface 3 essentiellement) et des caractéristiques de l'écoulement d'air (ses vitesse, densité, viscosité, capacité calorifique, conductivité, et son incidence par rapport à la surface sensible 3) éventuellement chargé de gouttelettes d'eau et/ou de cristaux de glace, et de l'écart de température entre ces deux milieux.

L'évolution temporelle de la température mesurée par le capteur 12 suit alors une loi selon une fonction continument croissante ayant un profil courbe à concavité tournée vers l'axe des abscisses (axe des temps), dont la pente diminue progressivement sans variation brutale.

Lorsque de la glace s'est formée sur la surface sensible 3, le flux thermique établi entre le réchauffeur 4 et cette surface sensible 3, au travers de l'élément sensible 2, est différent en raison d'échanges aérothermiques modifiés, entre la surface sensible 3 et l'écoulement d'air, du fait de la présence de la glace déposée. En effet, la présence de glace sur la surface sensible 3 empêche une convection forcée directe entre l'écoulement d'air et la surface sensible 3, et réduit le flux thermique par la conductivité thermique réduite de la glace. Il en découle une évolution (augmentation) plus rapide de la température mesurée par le capteur de température 12.

Ce réchauffement de la surface sensible 3 entraine, en raison de la chaleur latente de fusion de la glace en eau, la formation d'une pellicule d'eau à environ 0°c entre la couche de glace et la surface sensible, ce qui permet l'arrachement par l'écoulement d'air de la glace préalablement accumulée sur la surface sensible 3. Ceci crée une brusque transition entre les conditions thermiques en présence de glace et sans glace sur la surface 3, d'où une variation (augmentation) brutale des profils du flux thermique et de température mesurée par le capteur 12, ce qui peut être aisément détecté pour en déduire un signal de présence de givre.

Le fonctionnement du réchauffeur 4 peut être interrompu et celui du refroidisseur 5 commandé (le module à effet Peltier peut être commuté d'une alimentation en polarité inversée à une alimentation en polarité normale) pour refroidir la surface sensible 3, sans surrefroidissement par rapport aux conditions extérieures, éventuellement après un certain prolongement de l'étape de réchauffement pour garantir un dégivrage complet de la surface sensible 3, ainsi remise en conditions thermiques et d'état de surface pour un cycle suivant.

Concernant, à présent, le deuxième mode de fonctionnement du dispositif de l'invention en détecteur de conditions givrantes, il s'agit, dans une première phase ou étape de fonctionnement, de surrefroidir la surface sensible 3, par rapport à la température d'équilibre naturel afin de favoriser la formation de glace sur cette surface 3.

Au cours de cette première phase de surrefroidissement, la surface sensible 3 est donc portée puis maintenue à une température inférieure à la température imposée par l'écoulement d'air, afin de favoriser la formation de glace, comme schématiquement représenté par la couche de glace 13 déposée sur la surface sensible 3 de l'élément sensible 2, lors de la première phase (a) de la figure 2, dans des conditions proches du givrage. Ce surrefroidissement est assuré par le fonctionnement du refroidisseur 5 (par exemple le module à effet Peltier fonctionnant normalement en mode froid), de sorte que l'ensemble de l'élément sensible 2 est porté à une température négative marquée.

La seconde phase de fonctionnement est un réchauffement de l'élément sensible 2 et de sa surface sensible 3, par le fonctionnement du réchauffeur 4 et l'arrêt du refroidisseur 5 (par exemple par application d'une tension inverse au module à effet Peltier) afin de créer une montée régulière de la température de la surface sensible 3.

Si la surface sensible 3 n'est pas couverte de glace, la température mesurée par le capteur 12 augmente jusqu'à une valeur légèrement supérieure à 0°c. Les conditions sont alors déclarées « non givrantes ». Par contre, si la surface sensible 3 est recouverte, même partiellement, de glace, l'évolution (augmentation) de la température mesurée par le capteur 12, image de la température de la surface sensible 3, va subir un fléchissement à l'approche de 0°c, suivi d'un palier à une température proche de 0°c. Ce palier est provoqué par le réchauffement de la glace à 0°c puis la fusion d'une pellicule de glace en contact avec la surface sensible 3, formant ainsi une pellicule d'eau liquide à 0°c entre la glace et la surface sensible 3, cette couche d'eau entrainant l'arrachement rapide de la glace par perte d'adhérence sous l'effet de l'écoulement d'air. Durant la fusion de la glace, il se produit une accumulation thermique dans l'élément sensible 2, ce qui provoque une brutale montée de la température de la surface 3 lors de l'arrachement, même partiel, de la glace recouvrant préalablement cette surface 3. La température (positive) se stabilise ensuite rapidement en raison de la dissipation thermique par convection forcée agissant directement sur la surface sensible 3, qui est de plus totalement dégivrée par cette température positive.

La phase de fusion de la glace en une pellicule d'eau 14 entre la glace 13 et la surface sensible 3 est représentée schématiquement sur la deuxième phase (b) de ce processus, qui se termine par la phase (c) de la figure 2, après l'arrachement de la glace et l'enlèvement de l'eau de fusion par l'écoulement d'air pour dégager une surface sensible 3 totalement dégivrée.

Le mode de fonctionnement décrit ci-dessus s'illustre sur les figures 3a et 3b représentant, en superposition, des chronogrammes du flux thermique et de la température du capteur 12 dans l'élément sensible 2.

Sur la courbe de flux de la figure 3a, la zone 15 de variation du flux avec une faible pente correspond à une phase de réchauffe qui suit la phase d'accrétion de glace sur la surface sensible 3, puisque, comme déjà mentionné ci-dessus, le coefficient d'échange thermique entre la surface sensible 3 et l'écoulement d'air se réduit d'autant plus fortement que le dépôt de glace est important, en raison de la faible conductivité thermique de la glace.

Sur la courbe de température de la figure 3b, obtenue à partir des mesures du capteur 12, la zone de faible évolution 15 du flux thermique correspond à une zone 16 de croissance régulière de la température qui est essentiellement négative, avec une pente qui diminue progressivement jusqu'à sensiblement s'annuler au niveau d'un fléchissement 17 suivi d'un palier 18 à sensiblement 0°c, dus à la fusion d'une partie de la glace, comme expliqué ci-dessus. L'arrachement de la glace par l'écoulement d'air provoque, pour les raisons expliquées ci-dessus, une augmentation brutale 19 du flux thermique, en même temps qu'une augmentation brutale 20 de la température mesurée par le capteur 12, avec une rupture de pente très marquée, suivie, sur la courbe de flux de la figure 3a, d'un affaissement brutal mais d'amplitude limitée après un pic 21 et enfin une stabilisation avec une décroissance régulière à très faible pente sur la zone 22, en raison de la convection forcée directe sur la surface sensible 3, à présent à une température positive, également en stabilisation rapide, avec une pente positive faible et progressivement décroissante, sur la zone 23 de la courbe de température de la figure 3b.

Ainsi, pour détecter la présence de glace sur la surface sensible 3, surrefroidie par rapport aux conditions thermiques environnantes pour anticiper cette formation de glace, on peut détecter l'arrachement de cette glace en détectant une variation (augmentation) brutale 19 du flux thermique, correspondant à une augmentation brutale du coefficient d'échange thermique, et à laquelle il correspond une augmentation brutale 20 de la température mesurée et de la pente de la température, qui connait une rupture très marquée à ce niveau. Connaissant la puissance thermique générée pendant le réchauffement par le réchauffeur 4, on peut donc utiliser la relation existant entre la pente ou dérivée temporelle de la température et le coefficient d'échange thermique pour détecter une variation brutale de ce coefficient témoignant d'un arrachement de glace, ou encore utiliser la brusque remontée de la température 20 lors de l'arrachement, en relation avec l'effet d'accumulation thermique s'étant produit juste auparavant et/ou avec l'effet de stabilisation rapide par dissipation thermique par convection forcée en zone 23, ce qui peut, d'une manière pratique, être réalisé par des comparaisons entre la pente P2 de forte valeur dans la zone 20 de montée brutale de température, lors de l'arrachement de la couche de glace, et/ou l'une ou l'autre des pentes P1 et P3 respectivement dans les zones 16 et 23 de la courbe de température de la figure 3b, et pour lesquelles P1 est supérieure à P3, en étant très inférieure à P2.

A noter également que la comparaison des pentes P1 et P3 de la courbe de température de la figure 3b permet également de détecter une variation du coefficient d'échange thermique provoquée par un arrachement de la glace.

Le fonctionnement du capteur à effet d'échange thermique 1, utilisé dans le dispositif de l'invention, peut être amélioré en empêchant l'accrétion de glace autour de la surface sensible 3, c'est-à-dire en assurant l'anti givrage de la surface libre extérieure 9 de la ceinture 8 du boîtier 7.

Il a déjà été mentionné que, lors du fonctionnement du refroidisseur 5, le réchauffeur 4 ne fonctionnant pas, la chaleur dégagée du côté opposé à l'élément sensible 2 est conduite par le drain thermique 6 dans le boîtier 7, jusqu'à la ceinture 8 et la surface libre externe 9 de cette dernière, de sorte que la ceinture chauffante 8 ainsi réalisée protège le capteur 1 d'un givrage complet, rendant toute détection impossible. En effet, l'anti givrage de la surface libre extérieure 9 de la ceinture 8 facilite l'arrachement de toute couche de glace formée sur la surface sensible 3. Pour assurer cet antigivrage de la surface 9 de la ceinture 8, y compris pendant l'étape de réchauffement pendant laquelle le réchauffeur 4 fonctionne (et non le refroidisseur 5), il peut être prévu un deuxième réchauffeur 24, comprenant au moins une résistance électrique chauffante, noyée dans la ceinture 8 à une faible distance sous la surface libre externe 9 de cette dernière et qui constitue un réchauffeur 24 dédié au maintien de cette surface 9 dégivrée, c'est-à-dire à une température faiblement positive, en toutes circonstances.

De plus, au moins un autre capteur de température 25, par exemple un thermocouple, peut être également implanté dans la ceinture 8, à une faible distance sous la surface libre 9 de cette dernière, de sorte à mesurer une température correspondant sensiblement à la température de la surface 9, et qui permet d'assurer une régulation thermique de la ceinture 8, à partir de laquelle peuvent être tirées des informations permettant d'affiner le fonctionnement du capteur 1 et sa détection de givre et/ou de conditions givrantes. Ainsi, la ceinture chauffante 8, isolée thermiquement de l'élément sensible 2 par le joint d'isolation thermique 10 afin de limiter les couplages thermiques entre ceinture 8 et élément sensible 2, a une surface libre extérieure 9 qui peut être anti-givrée par un dispositif de régulation de température et de chauffage, dont le point de consigne est au dessus de 0°c. L'intérêt d'un tel dispositif de régulation est d'assurer un dégagement du capteur à effet d'échange thermique 1, vis-à-vis d'une éventuelle couche de glace formée sur la structure de l'aéronef ou de la sonde, et qui pourrait gêner la détection.

Le troisième mode de fonctionnement consiste à mettre en oeuvre une succession de cycles de détection, tels que ceux décrits ci-dessus pour le deuxième mode de fonctionnement, dont les puissances de surrefroidissement, de réchauffement et de refroidissement peuvent être avantageusement régulées, en tenant compte des conditions aérothermiques environnantes, dans le but non seulement d'obtenir des informations sur la présence ou l'absence de conditions givrantes, mais également sur la sévérité des conditions givrantes.

A cet effet, une première mesure de sévérité peut consister, au cours de la répétition en succession de cycles de détection de conditions givrantes selon le premier ou le deuxième mode de fonctionnement décrit ci-dessus en référence aux figures 2, 3a et 3b, à mesurer la durée du palier 18 à sensiblement 0°c, et à suivre l'évolution temporelle de cette durée, car plus ce palier est long, plus la couche de glace formée sur la surface sensible 3 est épaisse, et donc plus forte est la sévérité des conditions givrantes dans l'environnement de l'aéronef en vol. Cette durée du palier 18 peut être mesurée entre un instant de passage de la pente de la courbe de température en dessous d'un seuil faiblement positif, et un instant de passage de cette même pente à une valeur supérieure à un deuxième seuil de pente, fortement positif, correspondant à l'augmentation brutale 20 de température. Ainsi, des ruptures de pente peuvent être non seulement détectées à proximité de 0°c et/ou suite au passage par le palier 18 à 0°c, pour détecter la présence de glace, mais également pour mesurer la durée du palier 18 à 0°c, en tant qu'indice de sévérité des conditions givrantes.

Une autre information sur la sévérité des conditions givrantes peut être tirée du pilotage de la durée de la phase d'accrétion de glace sur la surface sensible 3 surrefroidie, au cours de cycles successifs, par la réduction de la durée des phases d'accrétion (ou phases de surrefroidissement) 26a, 26b et 26c successives de tels cycles, entrainant la réduction de la durée des paliers à 0°c 18a et 18b successifs, jusqu'à la disparition de ce palier à 0°c, pour, par exemple, le troisième cycle représenté sur la figure 4, ce qui correspond à la limite de détection de la présence de glace. En effet, plus la durée de la dernière phase d'accrétion 26c, pour laquelle le palier à 0°c correspondant disparait, est faible, plus les conditions de givrage sont sévères. En d'autres termes, ce pilotage consiste à réduire progressivement la durée de la phase d'accrétion 26a, 26b, 26c au cours de cycles successifs, jusqu'à constater la disparition du signal de détection, à une limite de détection correspondant à la plus longue durée de la phase d'accrétion 26c, sans obtenir de dépôt de glace sur la surface sensible 3. Bien entendu, entre deux phases d'accrétion successives telles que 26a et 26b ou 26b et 26c, il se déroule une étape de réchauffement, avec montée progressive en température négative dans la zone 16, suivie d'un palier 18a ou 18b à sensiblement 0°c, lui-même suivi d'une augmentation brusque 20 de la température et de la pente de température, témoignant de l'augmentation brusque du coefficient d'échange thermique par convection forcée sur la surface sensible 3 lors de l'arrachement de la glace par effet aérodynamique, cette augmentation brusque 20 étant elle-même suivie d'un refroidissement 27, pour raccourcir le délai de retour en conditions initiales surefroidies, pour débuter le cycle suivant, en reprenant sur la figure 4, les mêmes références que celles de la figure 3b, pour désigner les mêmes zones des courbes, mais en leur affectant des indices a, b et c pour identifier les premier, deuxième et troisièmes cycles consécutifs d'une telle séquence. Dans ces cycles de détection, chaque étape de réchauffement est utilisée, à la fois pour détecter l'arrachement de glace et dégivrer la surface sensible 3. Des cycles de détection enchainés en succession permettent ainsi de définir la sévérité de givrage en observant leur succession, l'évolution des délais d'accrétion successifs, en particulier leur durée, et l'évolution du niveau de refroidissement nécessaire à l'accrétion de glace.

Au cours des cycles de détection successifs, le surrefroidissement de l'élément sensible 2 et de la surface sensible 3 peut être modulé en fonction des conditions aérothermiques extérieures, de sorte à assurer une accrétion de glace sur la surface sensible 3 lorsqu'on est proche des conditions givrantes, ce surrefroidissement étant suivi d'un réchauffement jusqu'à une température proche de 0°c et l'observation de la pente et de l'évolution de la pente de la courbe de température en fonction du temps.

Pour tenir compte des conditions aérothermiques environnantes, le dispositif de détection selon l'invention, dont un exemple est schématiquement représenté sur la figure 5, comprend non seulement au moins un capteur à effet d'échange thermique 1 selon la figure 1 ou un capteur analogue 1' selon la figure 5, mais également une unité de commande et mesure électronique 28 comprenant un circuit électronique de régulation de puissance 29, alimenté électriquement en 30 et alimentant électriquement le réchauffeur 4 et le refroidisseur 5 constituant un générateur de flux thermique du capteur 1', par la ligne 31, l'unité 28 comprenant également un circuit électronique de mesure 32, assurant le suivi des flux thermiques à partir des informations de mesure de température qu'il reçoit de deux capteurs de température (thermocouples) 12 et 12' implantés dans l'élément sensible 2 du capteur 1', à une faible distance de la surface sensible 3 de cet élément 2, mais en étant séparés l'un de l'autre d'une faible distance dans une direction perpendiculaire (localement) à la surface sensible 3, de sorte que la différence de température entre les mesures instantanées des deux capteurs 12 et 12' soit proportionnelle au flux thermique instantané dans l'élément sensible 2. Le circuit de mesure 32 reçoit, par la ligne 33, des informations de traitement qui lui sont transmises par une unité de traitement de données 34 de l'unité 28, laquelle unité de traitement de données 34 transmet également en 35 des informations de traitement au circuit de régulation 29 transmettant, en sens inverse, en 36 des informations de régulation à l'unité 34, qui reçoit, de même, des informations de mesure en 37 du circuit de mesure 32. L'unité de traitement de données 34 met en oeuvre des programmes 38 relatifs à des algorithmes de traitement des informations de régulation et de mesure notamment. L'unité 28 comprend aussi une interface d'entrée 39, recevant des signaux, notamment de vitesse de l'aéronef (nombre de Mach), de température totale ou d'arrêt et de température statique, provenant d'une centrale de mesure de l'aéronef ou d'un équipement embarqué sur ce dernier, et nécessaires à la prise en compte des conditions aérothermiques extérieures pour la détection des conditions givrantes, l'unité 28 comportant enfin une interface de sortie 40 délivrant un signal de détection de givre ou de détection de conditions givrantes avantageusement assorti d'un signal de sévérité.

## Revendications

1. Procédé de détection de givre et/ou de conditions givrantes sur un aéronef en vol, sur lequel au moins une surface externe libre, exposée au vent relatif, sur la peau (S) de l'aéronef ou sur une sonde en saillie sur l'aéronef dans l'écoulement aérodynamique autour de ce dernier, est réservée comme surface sensible de détection (3), sur laquelle une accrétion de givre ou glace (13) est susceptible de se former en vol en conditions givrantes, le procédé étant **caractérisé en ce qu'**il comprend au moins un cycle comportant au moins les étapes suivantes, consistant à :
- surveiller les variations du flux thermique entre ladite surface sensible (3) et ledit écoulement aérodynamique, qui découlent des variations du coefficient d'échange thermique par convection forcée entre ladite surface sensible (3) et ledit écoulement aérodynamique en fonction de l'accrétion de givre ou glace (13),
- considérer qu'il y a arrachement, par ledit écoulement, d'une pellicule de givre ou glace (13) formée sur ladite surface sensible (3) si, après un intervalle de temps au cours duquel on constate une réduction (15) lente ou sensiblement nulle du flux thermique, on détecte une augmentation brusque (19) dudit flux thermique, à une température voisine du point de fusion du givre ou de la glace (13), et
- délivrer, suite à la détection d'un arrachement de givre ou glace, un signal de présence de givre ou de conditions givrantes.

2. Procédé selon la revendication 1, **caractérisé en ce qu'**il comprend également, de préférence pour chaque cycle, au moins une étape de réchauffement (16, 17, 18, 20, 23) de ladite surface sensible (3) par mise de cette dernière en relation d'échange thermique avec au moins un réchauffeur (4), de sorte à provoquer au moins une fusion partielle (14) d'une pellicule de givre ou glace (13) éventuellement formée sur ladite surface sensible (3), au cours d'au moins une phase antérieure d'accrétion de givre ou glace.

3. Procédé selon la revendication 2, **caractérisé en ce qu'**au moins une étape de réchauffement (23) de ladite surface sensible (3) est utilisée pour dégivrer cette dernière, au moins à la suite d'un arrachement au moins partiel de la pellicule de givre ou glace (13) qui la recouvrait.

4. Procédé selon l'une des revendications 2 et 3, **caractérisé en ce que** l'étape de réchauffement (16, 17, 18, 20, 23) ou la dernière d'entre elles est suivie, de préférence pour chaque cycle, d'une étape finale, qui est une étape de refroidissement (27), permettant un retour plus rapide que par un refroidissement naturel à une température appropriée comme température initiale pour commencer un cycle suivant.

5. Procédé selon l'une quelconque des revendications 1 à 4 **caractérisé en ce qu'**il comprend de plus, de préférence pour chaque cycle, une première étape, qui est une étape de surrefroidissement (26a, 26b, 26c) de ladite surface sensible (3), par rapport à la température d'équilibre naturel, par mise de ladite surface sensible (3) en relation d'échange thermique avec au moins un refroidisseur (5), de sorte à favoriser la formation de givre ou glace (13) sur ladite surface sensible (3) dans des conditions proches du givrage.

6. Procédé selon la revendication 5, **caractérisé en ce qu'**il comprend au moins une succession d'au moins deux cycles, dont l'un au moins, et de préférence chacun, comprend au moins une étape de surrefroidissement (26a, 26b, 26c) suivie d'au moins une étape de réchauffement (16, 18a, 18b, 20), elle-même suivie, d'au moins une étape de refroidissement (27) de ladite surface sensible (3), de sorte à anticiper puis détecter la formation de givre ou glace (13) par détection de son arrachement, et régénérer ladite surface sensible (3), puis ramener cette dernière à des conditions de température plus favorables au déroulement du cycle suivant.

7. Procédé selon l'une quelconque des revendications 1 à 6, **caractérisé en ce que** l'évolution du flux thermique est déterminée à partir de la puissance thermique générée et de mesures de température à l'aide d'au moins un capteur de température (12) disposé sous ladite surface sensible (3), et la surveillance des modifications du profil de température de ladite surface sensible (3).

8. Procédé selon la revendication 7, **caractérisé en ce que** les modifications dudit profil de température sont déterminées par le calcul de la dérivée temporelle d'un écart de température ou d'une température.

9. Procédé selon l'une quelconque des revendications 7 et 8, **caractérisé en ce qu'**il comprend un suivi temporel sensiblement en continu de l'évolution de la température de ladite surface sensible (3), et la délivrance d'un signal témoignant d'un arrachement de givre ou glace (13), préalablement déposé sur la surface sensible (3), ledit signal résultant de la détection d'au moins une rupture de pente (P1, P2, P3) de la courbe de température, résultant dudit suivi temporel.

10. Procédé selon la revendication 9, **caractérisé en ce qu'**il comprend de plus au moins une mesure de la durée d'un palier (18a, 18b) à sensiblement 0°c sur la courbe de température, de sorte à obtenir un signal de sévérité des conditions givrantes, du fait que la durée dudit palier (18a, 18b) est d'autant plus longue que l'épaisseur de la pellicule de glace ou givre (13) déposée est épaisse.

11. Procédé selon l'une quelconque des revendications 2 à 10, **caractérisé en ce qu'**il comprend de plus le pilotage de la durée de la phase d'accrétion de givre ou glace (13) préalable à toute étape de réchauffement (16-18, 20, 23), ce pilotage consistant à réduire progressivement la durée de ladite phase d'accrétion (26a, 26b, 26c) au cours de cycles successifs, jusqu'à constater la disparition du signal de détection, à une limite de détection correspondant à la plus longue durée (26c) de la phase d'accrétion sans obtenir de dépôt de givre ou glace sur ladite surface sensible (3), du fait que les conditions de givrage sont d'autant plus sévères que cette durée limite est courte.

12. Procédé selon l'une quelconque des revendications 1 à 11, **caractérisé en ce qu'**il utilise des informations de référence comprenant au moins des mesures de vitesse de l'aéronef, de température d'arrêt et/ou de température statique, fournies par l'aéronef et/ou un autre dispositif embarqué sur ou dans ce dernier.

13. Dispositif de détection de givre et/ou de conditions givrantes sur un aéronef en vol, pour la mise en oeuvre du procédé selon l'une quelconque des revendications 1 à 12, et qui comporte au moins une surface externe (3) sensible à l'accrétion de givre ou glace (13) en vol de l'aéronef en conditions givrantes, et, dans un boîtier (7), au moins un réchauffeur (4) avec lequel ladite surface externe (3) est sélectivement mise en relation d'échange thermique, et au moins un capteur de température (12, 12') détectant une température image de la température de ladite surface externe (3), ledit au moins un capteur de température (12, 12') et ledit au moins un réchauffeur (4) étant reliés à des circuits électroniques respectivement de mesure (32) et de régulation (29), en communication avec une unité de traitement de données (34) apte à délivrer un signal de détection de givre, **caractérisé en ce qu'**il comprend au moins un capteur (1, 1') à effet d'échange thermique, comportant au moins un élément sensible (2) conducteur de la chaleur présentant une surface libre (3), destinée à être exposée au vent relatif lorsque ledit capteur (1, 1') à effet d'échange est intégré dans la peau de l'aéronef ou dans une sonde, montée en saillie sur l'aéronef dans l'écoulement aérodynamique autour de ce dernier, de sorte que ladite surface libre (3) dudit élément sensible (2) constitue ladite surface externe sensible, ledit au moins un capteur de température (12, 12') étant disposé dans ledit élément sensible (2), à proximité de ladite surface sensible (3), de sorte à délivrer audit circuit de mesure (32) un signal de température image de la température de ladite surface externe (3) et permettant le suivi temporel du flux thermique dans ledit élément sensible (2), qui est mis sélectivement en contact thermique avec ledit au moins un réchauffeur (4) et au moins un refroidisseur (5), en étant monté avec ledit réchauffeur (4) et ledit refroidisseur (5) dans ledit boîtier (7) conducteur de la chaleur, et muni d'un drain thermique (6), permettant l'évacuation de chaleur extraite dudit élément sensible (2) par ledit au moins un refroidisseur (5), ledit au moins un refroidisseur (5) étant également relié audit circuit électronique de régulation (29), lequel constitue, avec ledit circuit électronique de mesure (32) et ladite unité de traitement des données (24), une unité de commande et mesure électronique (28), apte à assurer le suivi temporel du flux thermique dans ledit élément sensible (2) à partir des informations de mesure de température reçues dudit au moins un capteur de température (12, 12'), et à détecter, suite à un intervalle de temps pendant lequel la température est faiblement croissante ou en palier et proche de 0°, une augmentation brusque de température, provoquée par un arrachement de glace ou de givre de ladite surface externe (3), de sorte que ladite unité de traitement de données (34) est également apte à délivrer un signal de détection de conditions givrantes.

14. Dispositif selon la revendication 13, **caractérisé en ce qu'**il comprend au moins un module à effet Peltier (4-5) ou thermoacoustique constituant un refroidisseur (5) et/ou un réchauffeur (4), selon la polarité de son alimentation électrique et l'éventuelle inversion de cette polarité.

15. Dispositif selon la revendication 14, **caractérisé en ce que** ledit réchauffeur (4) est constitué par au moins une résistance électrique chauffante intégrée dans ledit boîtier (7), pour réchauffer la surface sensible (3), tandis qu'au moins un module à effet Peltier ou thermoacoustique est également intégré dans ledit boîtier (7) et utilisé uniquement comme refroidisseur (5), pour des étapes de refroidissement (27) et/ou de surrefroidissement (26a, 26b, 26c) de la surface sensible (3).

16. Dispositif selon l'une quelconque des revendications 13 à 15, **caractérisé en ce que** ledit boîtier (7) délimite une ceinture (8) conductrice de la chaleur, entourant au moins partiellement ladite surface sensible (3) et sensiblement dans le prolongement de cette dernière, de sorte que ladite ceinture (8) et ladite surface sensible (3) sont simultanément exposées à l'écoulement aérodynamique autour de l'aéronef, ladite ceinture (8) étant protégée contre la formation de givre ou glace sur elle par réchauffement par ledit drain thermique (6) et/ou par au moins un réchauffeur dédié (24) .

17. Dispositif selon l'une quelconque des revendications 13 à 16, **caractérisé en ce que** ledit élément sensible (2) est, d'une part, isolé thermiquement (10) dudit boîtier (7), et, d'autre part, en contact thermique avec au moins un réchauffeur (4) et au moins un refroidisseur (5), avantageusement sous la forme d'au moins un module à effet Peltier (4-5) ou thermoacoustique, disposés en interface entre ledit élément sensible (2) et ledit drain thermique (6) .

## Claims

1. A method of detecting frost and/or frosty conditions on an aircraft in flight, on which at least one free external surface, exposed to the relative wind, on the skin (S) of the aircraft or on a probe projecting from the aircraft into the aerodynamic flow around the latter, is reserved as a detection-sensitive surface (3), on which a build-up of frost or ice (13) is likely to be formed in flight in frosty conditions, the method being **characterized in that** it comprises at least one cycle with at least the following steps, consisting in:
- monitoring the variations of the thermal flux between said sensitive surface (3) and said aerodynamic flow, which are caused by the variations of the forced convection thermal exchange coefficient between said sensitive surface (3) and said aerodynamic flow according to the build-up of frost or ice (13),
- considering that said flow has caused a film of frost or ice (13) formed on said sensitive surface (3) to tear off if, after a time interval during which a slow or substantially zero reduction (15) of the thermal flux is observed, an abrupt increase (19) is detected in said thermal flux, at a temperature close to the melting point of the frost or ice (13), and
- following the detection of a tearing-off of frost or ice, delivering a signal indicating the presence of frost or frosty conditions.

2. The method as claimed in claim 1, **characterized in that** it also comprises, preferably for each cycle, at least one step (16, 17, 18, 20, 23) of heating said sensitive surface (3) by placing the latter in a thermal exchange relationship with at least one heater (4), so as to provoke at least a partial melting (14) of a film of frost or ice (13) that may be formed on said sensitive surface (3), during at least one prior frost or ice build-up phase.

3. The method as claimed in claim 2, **characterized in that** at least one step (23) of heating said sensitive surface (3) is used to defrost the latter, at least following an at least partial tearing-off of the film of frost or ice (13) that covered it.

4. The method as claimed in one of claims 2 and 3, **characterized in that** the heating step (16, 17, 18, 20, 23) or the last of the heating steps is followed, preferably for each cycle, by a final step, which is a cooling step (27), enabling a faster return than by natural cooling to an appropriate temperature as an initial temperature to begin a next cycle.

5. The method as claimed in any one of claims 1 to 4, **characterized in that** it also comprises, preferably for each cycle, a first step, which is a step (26a, 26b, 26c) of overcooling said sensitive surface (3), relative to the natural balance temperature, by placing said sensitive surface (3) in a thermal exchange relationship with at least one cooler (5), so as to favor the formation of frost or ice (13) on said sensitive surface (3) in near-frosty conditions.

6. The method as claimed in claim 5, **characterized in that** it comprises at least one succession of at least two cycles, at least one of which, and preferably each of which, comprises at least one overcooling step (26a, 26b, 26c) followed by at least one heating step (16, 18a, 18b, 20), followed in turn by at least one step (27) of cooling said sensitive surface (3), so as to anticipate and then detect the formation of frost or ice (13) by detecting its tearing-off, and regenerate said sensitive surface (3), and then return the latter to temperature conditions more favorable to the progress of the next cycle.

7. The method as claimed in any one of claims 1 to 6, **characterized in that** the trend of the thermal flux is determined from the thermal power generated and temperature measurements using at least one temperature sensor (12) positioned under said sensitive surface (3), and by monitoring the modifications of the temperature profile of said sensitive surface (3).

8. The method as claimed in claim 7, **characterized in that** the modifications of said temperature profile are determined by calculating the time drift of a temperature deviation or a temperature.

9. The method as claimed in any one of claims 7 or 8, **characterized in that** it comprises a substantially continuous time tracking of the trend of the temperature of said sensitive surface (3), and the delivery of a signal indicating a tearing-off of frost or ice (13), previously deposited on the sensitive surface (3), said signal resulting from the detection of at least one break in the slope (P1, P2, P3) of the temperature curve, resulting from said time tracking.

10. The method as claimed in claim 9, **characterized in that** it also comprises at least one measurement of the duration of a level (18a, 18b) at substantially 0°C on the temperature curve, so as to obtain a signal indicating the severity of the frosty conditions, because the duration of said level (18a, 18b) is all the longer when the thickness of the film of deposited ice or frost (13) is thick.

11. The method as claimed in any one of claims 2 to 10, **characterized in that** it also comprises controlling the duration of the frost or ice (13) build-up phase prior to any heating step (16-18, 20, 23), this control consisting in gradually reducing the duration of said build-up phase (26a, 26b, 26c) during successive cycles, until the disappearance of the detection signal is observed, to a detection limit corresponding to the longest duration (26c) of the build-up phase without obtaining a deposit of frost or ice on said sensitive surface (3), because the frosty conditions are all the more severe when this limit duration is short.

12. The method as claimed in any one of claims 1 to 11, **characterized in that** it uses reference information comprising at least measurements of the speed of the aircraft, of total temperature and/or of static temperature, supplied by the aircraft and/or another onboard device on or in the latter.

13. A device for detecting frost and/or frosty conditions on an aircraft in flight, for implementing the method according to any one of claims 1 to 12, and which comprises at least one external surface (3) sensitive to the build-up of frost or ice (13) when the aircraft is flying in frosty conditions, and, in a casing (7), at least one heater (4) with which said external surface (3) is selectively placed in a thermal exchange relationship, and at least one temperature sensor (12, 12') detecting a temperature mirroring the temperature of said external surface (3), said at least one temperature sensor (12) and said at least one heater (4) being linked to respective measurement (32) and regulation (29) electronic circuits, in communication with a data processing unit (34) capable of delivering a frost detection signal, **characterized in that** it comprises at least one thermal exchange effect sensor (1, 1'), with at least one heat conducting sensitive element (2) having a free surface (3), designed to be exposed to the relative wind when said exchange effect sensor (1, 1') is incorporated in the skin of the aircraft or in a probe, mounted to project from the aircraft into the aerodynamic flow around the latter, so that said free surface (3) of said sensitive element (2) constitutes said sensitive external surface, said at least one temperature sensor (12, 12') being positioned in said sensitive element (2), close to said sensitive surface (3), so as to deliver to said measurement circuit (32) a temperature signal mirroring the temperature of said external surface (3) and making it possible to track the thermal flux over time in said sensitive element (2), which is selectively placed in thermal contact with said at least one heater (4) and at least one cooler (5), by being mounted with said heater (4) and said cooler (5) in said heat-conducting casing (7), and provided with a thermal drain (6), making it possible to dispel heat extracted from said sensitive element (2) through said at least one cooler (5), said at least one cooler (5) being also linked to said electronic regulation circuit (29), which constitutes, with said electronic measurement circuit (32) and said data processing unit (24), an electronic control and measurement unit (28), capable of providing the time-tracking of the thermal flux in said sensitive element (2) from temperature measurement information received from said at least one temperature sensor (12, 12'), and of detecting, after a time interval during which the temperature is slowly rising or level close to 0°, an abrupt temperature increase, provoked by a tearing-off of ice or frost from said external surface (3), so that said data processing unit (34) is also able to deliver a signal indicating the detection of frosty conditions.

14. The device as claimed in claim 13, **characterized in that** it comprises at least one Peltier effect module (4-5) or thermoacoustic-effect module constituting a cooler (5) and/or a heater (4), depending on the polarity of its electrical power supply and the possible reversal of this polarity.

15. The device as claimed in claim 14, **characterized in that** said heater (4) is formed by at least one electrical heating element incorporated in said casing (7), for heating the sensitive surface (3), while at least one Peltier effect module or thermoacoustic-effect module is also incorporated in said casing (7) and used only as a cooler (5), for steps of cooling (27) and/or overcooling (26a, 26b, 26c) the sensitive surface (3).

16. The device as claimed in any one of claims 13 to 15, **characterized in that** said casing (7) delimits a heat-conducting band (8), at least partially surrounding said sensitive surface (3) and substantially in the extension of the latter, so that said band (8) and said sensitive surface (3) are simultaneously exposed to the aerodynamic flow around the aircraft, said band (8) being protected against the formation of frost or ice on it by heating by said thermal drain (6) and/or by at least one dedicated heater (24).

17. The device as claimed in any one of claims 13 to 16, **characterized in that** said sensitive element (2) is, on the one hand, thermally insulated (10) from said casing (7), and, on the other hand, in thermal contact with at least one heater (4) and at least one cooler (5), advantageously in the form of at least one Peltier effect module (4-5) or thermoacoustic-effect module, positioned as an interface between said sensitive element (2) and said thermal drain (6).

## Patentansprüche

1. Verfahren zur Erfassung von Reif und/oder von Vereisungsbedingungen an einem fliegenden Luftfahrzeug, auf dem mindestens eine dem relativen Wind ausgesetzte freie Außenfläche auf der Haut (S) des Luftfahrzeugs oder auf einer auf dem Luftfahrzeug in die aerodynamische Strömung um dieses herum vorstehenden Sonde als empfindliche Erfassungsfläche (3) reserviert ist, auf der sich im Flug unter Vereisungsbedingungen eine Anlagerung von Reif oder Eis (13) formen kann, wobei das Verfahren **dadurch gekennzeichnet ist, dass** es mindestens einen Zyklus enthält, der mindestens die folgenden Schritte enthält, die darin bestehen:
- die Veränderungen des Wärmestroms zwischen der empfindlichen Fläche (3) und der aerodynamischen Strömung zu überwachen, die sich aus den Veränderungen des Wärmeaustauschkoeffizienten durch erzwungene Konvektion zwischen der empfindlichen Fläche (3) und der aerodynamischen Strömung abhängig von der Anlagerung von Reif oder Eis (13) ergeben,
- anzunehmen, dass es einen Abriss, durch die Strömung, eines Films von Reif oder Eis (13) gibt, der auf der empfindlichen Fläche (3) geformt ist, wenn nach einem Zeitraum, während dem eine Verringerung (15) des Wärmestroms festgestellt wird, die langsam oder im Wesentlichen null ist, eine abrupte Erhöhung (19) des Wärmestroms auf eine Temperatur nahe dem Schmelzpunkt des Reifs oder des Eises (13) erfasst wird, und
- nach der Erfassung eines Abrisses von Reif oder Eis ein Signal des Vorhandenseins von Reif oder von Vereisungsbedingungen zu liefern.

2. Verfahren nach Anspruch 1, **dadurch gekennzeichnet, dass** es ebenfalls vorzugsweise für jeden Zyklus mindestens einen Schritt der Erwärmung (16, 17, 18, 20, 23) der empfindlichen Fläche (3) durch Wärmetauschverbindung dieser letzteren mit mindestens einem Erhitzer (4) enthält, um mindestens ein teilweises Schmelzen (14) eines Films von Reif oder Eis (13) zu bewirken, der sich ggf. während mindestens einer früheren Phase der Anlagerung von Reif oder Eis auf der empfindlichen Fläche (3) geformt hat.

3. Verfahren nach Anspruch 2, **dadurch gekennzeichnet, dass** mindestens ein Schritt der Erwärmung (23) der empfindlichen Fläche (3) verwendet wird, um diese letztere zu enteisen, zumindest nach einem zumindest teilweisen Abriss des Films von Reif oder Eis (13), der sie bedeckte.

4. Verfahren nach einem der Ansprüche 2 und 3, **dadurch gekennzeichnet, dass** auf den Schritt der Erwärmung (16, 17, 18, 20, 23) oder den letzten von ihnen vorzugsweise für jeden Zyklus ein Endschritt folgt, der ein Schritt der Abkühlung (27) ist, der eine schnellere Rückkehr als durch eine natürlich Abkühlung auf eine geeignete Temperatur als Ausgangstemperatur für den Beginn eines folgenden Zyklus erlaubt.

5. Verfahren nach einem der Ansprüche 1 bis 4, **dadurch gekennzeichnet, dass** es zusätzlich vorzugsweise für jeden Zyklus einen ersten Schritt enthält, der ein Schritt der Unterkühlung (26a, 26b, 26c) der empfindliche Fläche (3) bezüglich der Temperatur des natürlichen Gleichgewichts ist, durch Wärmetauschverbindung der empfindlichen Fläche (3) mit mindestens einem Kühler (5), um die Bildung von Reif oder Eis (13) auf der empfindlichen Fläche (3) unter Bedingungen nahe der Vereisung zu begünstigen.

6. Verfahren nach Anspruch 5, **dadurch gekennzeichnet, dass** es mindestens eine Folge von mindestens zwei Zyklen enthält, von denen mindestens einer, und vorzugsweise alle, mindestens einen Schritt der Unterkühlung (26a, 26b, 26c) gefolgt von mindestens einem Schritt der Erwärmung (16, 18a, 18b, 20) enthält, auf den selbst mindestens ein Schritt der Kühlung (27) der empfindlichen Fläche (3) folgt, um die Bildung von Reif oder Eis (13) durch Erfassung seines Abrisses vorwegzunehmen und dann zu erfassen, und die empfindliche Fläche (3) zu regenerieren, und dann diese letztere auf Temperaturbedingungen zurückzubringen, die für den Ablauf des folgenden Zyklus günstiger sind.

7. Verfahren nach einem der Ansprüche 1 bis 6, **dadurch gekennzeichnet, dass** die Entwicklung des Wärmestroms ausgehend von der erzeugten Wärmeleistung und von Temperaturmessungen mit Hilfe mindestens eines Temperaturmessfühlers (12), der unter der empfindlichen Fläche (3) angeordnet ist, und der Überwachung der Veränderungen des Temperaturprofils der empfindlichen Fläche (3) bestimmt wird.

8. Verfahren nach Anspruch 7, **dadurch gekennzeichnet, dass** die Veränderungen des Temperaturprofils durch die Berechnung der zeitlichen Ableitung einer Temperaturabweichung oder einer Temperatur bestimmt werden.

9. Verfahren nach einem der Ansprüche 7 und 8, **dadurch gekennzeichnet, dass** es eine im Wesentlichen kontinuierliche zeitliche Verfolgung der Entwicklung der Temperatur der empfindlichen Fläche (3) und das Liefern eines Signals enthält, das einen Abriss von Reif oder Eis (13) bestätigt, der/das vorher auf der empfindlichen Fläche (3) abgelagert wurde, wobei das Signal aus der Erfassung mindestens einer Steigungsunterbrechung (P1, P2, P3) der Temperaturkurve resultiert, die aus der zeitlichen Verfolgung resultiert.

10. Verfahren nach Anspruch 9, **dadurch gekennzeichnet, dass** es außerdem mindestens eine Messung der Dauer eines Flachteils (18a, 18b) bei im Wesentlichen 0°C auf der Temperaturkurve enthält, um ein Signal der Schwere der Vereisungsbedingungen zu erhalten, da die Dauer des Flachteils (18a, 18b) um so länger ist, als die Dicke des Films von abgelagertem Eis oder Reif (13) dick ist.

11. Verfahren nach einem der Ansprüche 2 bis 10, **dadurch gekennzeichnet, dass** es außerdem die Steuerung der Dauer der Phase der Anlagerung von Reif oder Eis (13) vor jedem Schritt der Erwärmung (16-18, 20, 23) enthält, wobei diese Steuerung darin besteht, die Dauer der Phase der Anlagerung (26a, 26b, 26c) während aufeinanderfolgender Zyklen progressiv, bis zum Feststellen des Verschwindens des Erfassungssignals, auf eine Erfassungsgrenze zu verkürzen, die der längsten Dauer (26c) der Phase der Anlagerung entspricht, ohne eine Schicht von Reif oder Eis auf der empfindlichen Fläche (3) zu erhalten, da die Vereisungsbedingungen um so schwerwiegender sind, je kürzer diese Grenzdauer ist.

12. Verfahren nach einem der Ansprüche 1 bis 11, **dadurch gekennzeichnet, dass** es Bezugsinformationen verwendet, die mindestens Messungen der Geschwindigkeit des Luftfahrzeugs, der Abschalttemperatur und/oder der statischen Temperatur enthalten, die vom Luftfahrzeug und/oder einer anderen Vorrichtung an Bord dieses letzteren geliefert werden.

13. Vorrichtung zur Erfassung von Reif und/oder von Vereisungsbedingungen an einem fliegenden Luftfahrzeug, zur Durchführung des Verfahrens nach einem der Ansprüche 1 bis 12, und die mindestens eine Außenfläche (3), die für die Anlagerung von Reif oder Eis (13) beim Flug des Luftfahrzeugs unter Vereisungsbedingungen empfindlich ist, und in einem Gehäuse (7) mindestens einen Erhitzer (4), mit dem die Außenfläche (3) selektiv in Wärmetauschbeziehung gebracht wird, und mindestens einen Temperaturmessfühler (12, 12') aufweist, der eine Bildtemperatur der Temperatur der Außenfläche (3) erfasst, wobei der mindestens eine Temperaturmessfühler (12, 12') und der mindestens eine Erhitzer (4) mit elektronischen Schaltkreisen zur Messung (32) bzw. Regelung (29) verbunden sind, die mit einer Datenverarbeitungseinheit (34) in Verbindung stehen, die ein Reiferfassungssignal liefern kann, **dadurch gekennzeichnet, dass** sie mindestens einen Sensor (1, 1') mit Wärmetauschwirkung enthält, der mindestens ein wärmeleitendes empfindliches Element (2) aufweist, das eine freie Fläche (3) besitzt, die dazu bestimmt ist, dem relativen Wind ausgesetzt zu sein, wenn der Sensor (1, 1') mit Tauschwirkung in die Haut des Luftfahrzeugs oder in eine Sonde integriert ist, die auf dem Luftfahrzeug in die aerodynamische Strömung um dieses letztere herum vorstehend montiert ist, so dass die freie Fläche (3) des empfindlichen Elements (2) die empfindliche Außenfläche bildet, wobei der mindestens eine Temperaturmessfühler (12, 12') im empfindlichen Element (2) in der Nähe der empfindlichen Fläche (3) angeordnet ist, um an den Messschaltkreis (32) ein Bildtemperatursignal der Temperatur der Außenfläche (3) zu liefern, und die zeitliche Verfolgung des Wärmestroms im empfindlichen Element (2) erlaubt, das selektiv mit dem mindestens einen Erhitzer (4) und mindestens einen Kühler (5) in thermischen Kontakt gebracht wird, indem es mit dem Erhitzer (4) und mit dem Kühler (5) in das wärmeleitende Gehäuse (7) montiert wird, und mit einer Wärmesenke (6) versehen ist, die die Abfuhr von Wärme erlaubt, die von dem empfindlichen Element (2) durch den mindestens einen Kühler (5) abgezogen wird, wobei der mindestens eine Kühler (5) ebenfalls mit dem elektronischen Regelschaltkreis (29) verbunden ist, der mit dem elektronischen Messschaltkreis (32) und mit der Datenverarbeitungseinheit (24) eine elektronische Steuer- und Messeinheit (28) bildet, die die zeitliche Verfolgung des Wärmestroms im empfindlichen Element (2) ausgehend von den vom mindestens einen Temperaturmessfühler (12, 12') empfangenen Temperaturmessinformationen gewährleisten kann, und nach einem Zeitraum, während dem die Temperatur schwach ansteigt oder sich auf einem Flachteil und nahe 0° befindet, eine abrupte Temperaturerhöhung zu erfassen, die von einem Abriss von Eis oder von Reif von der Außenfläche (3) bewirkt wird, so dass die Datenverarbeitungseinheit (34) ebenfalls in der Lage ist, ein Erfassungssignal von Vereisungsbedingungen zu liefern.

14. Vorrichtung nach Anspruch 13, **dadurch gekennzeichnet, dass** sie mindestens ein Peltier-Effekt- oder thermoakustisches Modul (4-5) enthält, das einen Kühler (5) und/oder einen Erhitzer (4) bildet, je nach der Polarität seiner Stromversorgung und der möglichen Umkehr dieser Polarität.

15. Vorrichtung nach Anspruch 14, **dadurch gekennzeichnet, dass** der Erhitzer (4) aus mindestens einem in das Gehäuse (7) integrierten elektrischen Heizwiderstand besteht, um die empfindliche Fläche (3) zu erwärmen, während mindestens ein Peltier-Effekt- oder thermoakustisches Modul ebenfalls in das Gehäuse (7) integriert ist und nur als Kühler (5) für Schritte der Kühlung (27) und/oder der Unterkühlung (26a, 26b, 26c) der empfindlichen Fläche (3) verwendet wird.

16. Vorrichtung nach einem der Ansprüche 13 bis 15, **dadurch gekennzeichnet, dass** das Gehäuse (7) einen wärmeleitenden Gürtel (8) begrenzt, der die empfindliche Fläche (3) zumindest teilweise und im Wesentlichen in deren Verlängerung umgibt, so dass der Gürtel (8) und die empfindliche Fläche (3) gleichzeitig der aerodynamischen Strömung um das Luftfahrzeug ausgesetzt sind, wobei der Gürtel (8) vor der Bildung von Reif oder Eis auf ihm durch die Erwärmung durch die Wärmesenke (6) und/oder durch mindestens einen dedizierten Erhitzer (24) geschützt wird.

17. Vorrichtung nach einem der Ansprüche 13 bis 16, **dadurch gekennzeichnet, dass** das empfindliche Element (2) einerseits thermisch (10) vom Gehäuse (7) isoliert ist und andererseits mit mindestens einem Erhitzer (4) und mindestens einem Kühler (5) in thermischem Kontakt steht, vorzugsweise in Form eines Peltier-Effekt- oder thermoakustischen Moduls (4-5), das als Schnittstelle zwischen dem empfindlichen Element (2) und der Wärmesenke (6) angeordnet ist.
